# EUROPEAN PATENT SPECIFICATION

(11) **EP 3 895 871 B1**
(45) Date of publication and mention of the grant of the patent: **02.08.2023**
(21) Application number: 20181861.4
(22) Date of filing: 24.06.2020
(51) Int. Cl.: B29C 45/17, B29C 33/38

(54) **INJECTION MOLDING APPARATUS AND INJECTION MOLDING METHOD**
SPRITZGIESSVORRICHTUNG UND SPRITZGIESSVERFAHREN
APPAREIL DE MOULAGE PAR INJECTION ET PROCÉDÉ DE MOULAGE PAR INJECTION

(30) Priority: 16.04.2020 TW 109112769
(43) Date of publication of application: 20.10.2021
(73) Proprietor: Chung Yuan Christian University, Taoyuan City 32023 (TW)
(72) Inventor: Chen, Shia-Chung, 32023 Taoyuan City (TW); Chang, Yung-Hsiang, 32023 Taoyuan City (TW); Chang, Che-Wei, 32023 Taoyuan City (TW); Tsai, Pi-Lin, 32023 Taoyuan City (TW)
(74) Representative: Ter Meer Steinmeister & Partner

(56) References cited:
- DE-A1- 19 855 929
- US-A1- 2005 230 863

## Description

### BACKGROUND

### Technical Field

The disclosure relates to a molding apparatus and a molding method, and in particular, to an injection molding apparatus and an injection molding method.

### Description of Related Art

In the process of forming an injection molding product, the material may contract due to thermal expansion and contraction, so a defect may be generated in a forming article, which may lead to a dent on the appearance of the product. Generally, a thicker region of the product may contract considerably since more material is used for that region, and a defect may thus be generated more easily.

Conventionally, external gas-assisted molding is used most of the time, and a gas needle is additionally installed near the thicker region of the product. A gas is introduced by the gas needle after injection molding is performed, and the gas enters the mold cavity through the gas needle to push the melted material in the mold cavity to the appearance of the mold surface. The disadvantage of the abovementioned configuration is that in the conventional gas needle design, since the gas is not easily controlled, the gas pressure may not be evenly distributed as a result. An excessively large gas pressure may even lead to gas penetration, and the appearance surface of the product may thus be damaged. Further, the abovementioned configuration fails to provided a good mold exhaust design. Therefore, how to provide a product produced through injection molding to exhibit a complete appearance surface and to feature a good mold exhaust design is an important issue in the injection molding technique.
DE 198 55 929 A1 discloses a process and an apparatus for the production of molded parts, in which decorative material is back-injected or back-pressed with a thermoplastic material, namely in a mold cavity which is formed by a multi-part tool. During the at least part of the cooling phase, gas pressure is exerted on the decorative surface of the molded parts. With shrinkage of the thermoplastic material in the course of cooling, a contact pressure between the decorative material and the mold cavity is reduced, so that the decorative material is protected.
US 2005/230863 A1 discloses a molding tool including a mold plate with narrow slots in the mold surface thereof and wider channels in the back surface thereof, with such slots and channels intersecting each other. The slots and channels are arranged so as to promote an effective, uniform distribution of a vacuum on the mold surface of the mold plate yet not promote deformation and/or dimpling of a part being formed upon the mold surface. A skirt is advantageously provided on the mold plate to facilitate the deposition of the structure material from a suspension during the vacuum molding procedure.

### SUMMARY

The disclosure provides an injection molding apparatus and an injection molding method through which a gas flows into or flows out of a mold cavity through a porous structure, so that a gas pressure is evenly distributed in the mold cavity and a favorable mold exhaust effect is provided.

The disclosure provides an injection molding apparatus comprising the features of claim 1. This injection molding apparatus according to the present invention includes mold, an injection device, a porous structure, and a gas-driven unit. The mold has a mold cavity. The injection device is adapted to inject a material into the mold cavity so that the material is formed into a forming article. The porous structure is disposed on an inner surface of the mold cavity and corresponds to a non-appearance surface of the forming article. The gas-driven unit is connected to the mold and is adapted to drive a gas to flow into or flow out of the mold cavity through the porous structure.

According to the present invention, the mold cavity includes a first forming space and a second forming space. A width of the first forming space in a thickness direction of the forming article is greater than a width of the second forming space in the thickness direction of the forming article. The porous structure corresponds to the first forming space.

According to the present invention, the inner surface of the mold cavity has a concave portion, the first forming space includes the concave portion, and a convex rib of the forming article is adapted to be formed inside the concave portion.

In an embodiment of the disclosure, the porous structure is adjacent to the concave portion.

In an embodiment of the disclosure, the porous structure is gas-permeable metal.

The disclosure further provides an injection molding method comprising the features of claim 4. The injection molding method according to the present invention includes the following steps. A mold and a porous structure are provided. The mold has a mold cavity, and the porous structure is disposed on an inner surface of the mold cavity. A material is injected into the mold cavity so that the material is formed into a forming article by an injection device. The porous structure corresponds to a non-appearance surface of the forming article. A gas is driven to flow into or flow out of the mold cavity through the porous structure by a gas-driven unit.

According to the present invention, the mold cavity includes a first forming space and a second forming space. A width of the first forming space in a thickness direction of the forming article is greater than a width of the second forming space in the thickness direction of the forming article. The step of providing the mold and the porous structure includes the following step. The porous structure is set to correspond to the first forming space.

According to the present invention, the inner surface of the mold cavity has a concave portion, and the first forming space includes the concave portion. The step of injecting the material into the mold cavity by the injection device includes the following step. A convex rib of the forming article is set to be formed inside the concave portion.

In an embodiment of the disclosure, the step of providing the mold and the porous structure includes the following step. The porous structure is set to be adjacent to the concave portion.

In an embodiment of the disclosure, the step of providing the porous structure includes the following step. The porous structure is set to be made of gas-permeable metal.

To sum up, in the disclosure, the porous structure is disposed on the inner surface of the mold cavity, and the gas is driven to flow into or flow out of the mold cavity through the porous structure by the gas-driven unit. Through such a configuration, since the porous structure and the inner surface of the mold cavity are in contact with each other through respective surfaces, the problem of uneven gas pressure distribution is prevented from occurring. Moreover, a good mold exhaust design is also provided, and a product featuring favorable quality and yield is therefore produced.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic view of an injection molding apparatus according to an embodiment of the disclosure.
FIG. 2 is a flow chart of an injection molding method according to an embodiment of the disclosure.
FIG. 3A and FIG. 3B are operational flows of the injection molding apparatus of FIG. 1.
FIG. 4 to FIG. 6 are schematic views of injection molding apparatuses according to other embodiments of the disclosure.

### DESCRIPTION OF THE EMBODIMENTS

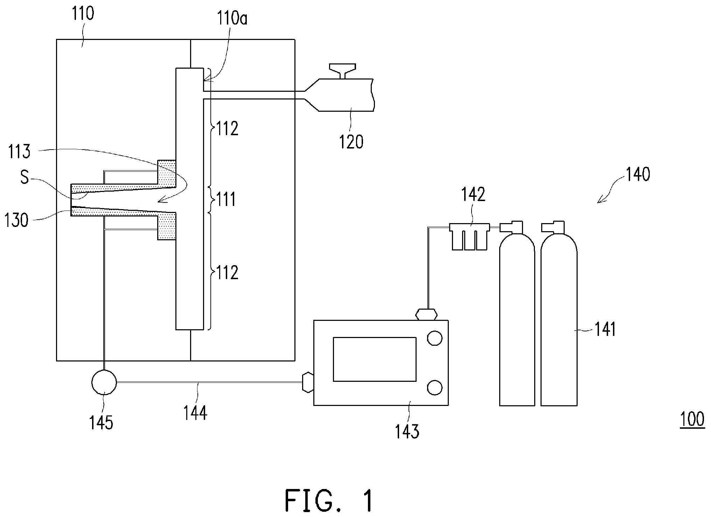

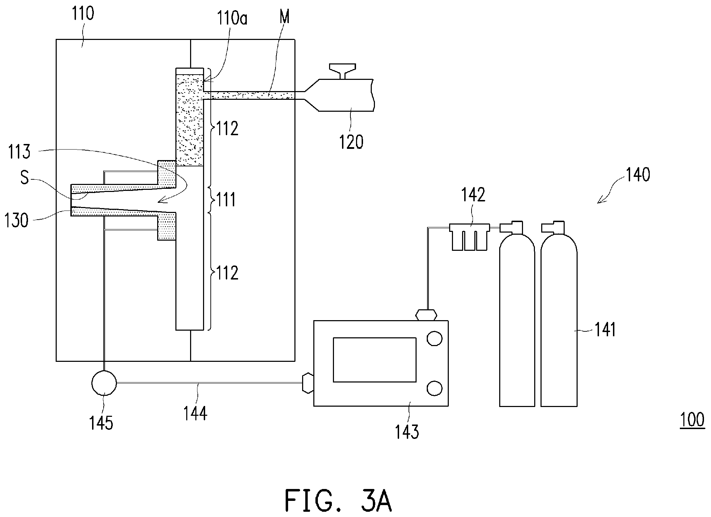

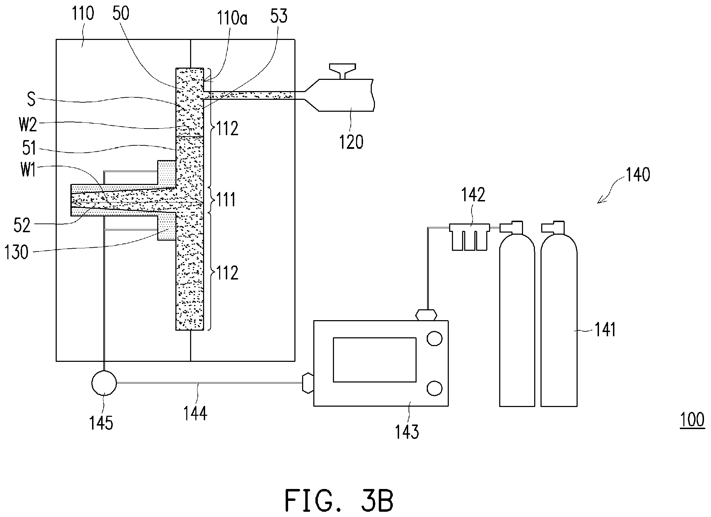

FIG. 1 is a schematic view of an injection molding apparatus according to an embodiment of the disclosure. With reference to FIG. 1, an injection molding apparatus 100 includes a mold 110, an injection device 120, a porous structure 130, and a gas-driven unit 140. The mold 110 has a mold cavity 110a. The injection device 120 is adapted to inject a material M (FIG. 3A) into the mold cavity 110a so that the material M (FIG. 3A) is formed into a forming article 50 (FIG. 3B).

The porous structure 130 is disposed on an inner surface S of the mold cavity 110a. The gas-driven unit 140 is connected to the mold 110 and is adapted to drive a gas to flow into or flow out of the mold cavity 110a through the porous structure 130.

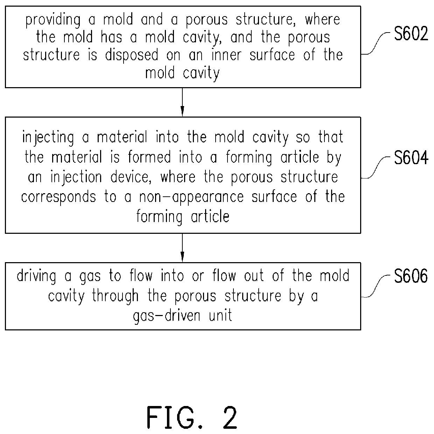

The injection molding apparatus 100 of FIG. 1 is taken as an example to illustrate an injection molding method provided by an embodiment of the disclosure as follows. FIG. 2 is a flow chart of an injection molding method according to an embodiment of the disclosure. FIG. 3A and FIG. 3B are operational flows of the injection molding apparatus 100 of FIG. 1.

Specifically, the mold 110 and the porous structure 130 are provided, where the mold 110 has the mold cavity 110a, and the porous structure 130 is disposed on the inner surface S of the mold cavity 110a (step S602). The material M is injected into the mold cavity 110a so that the material M is formed into the forming article 50 by the injection device 120, where the porous structure 130 corresponds to a non-appearance surface 51 of the forming article 50 (step S604). A gas is driven to flow into or flow out of the mold cavity 110a through the porous structure 130 by the gas-driven unit 140 (step S606).

With reference to FIG. 3A and FIG. 3B, in this embodiment, the gas-driven unit 140 includes a gas storage device 141, a gas filtering device 142, a gas controlling apparatus 143, a high-pressure gas pipeline 144, and a gas pressure gauge 145. The gas-driven unit 140 is adapted to provide the gas into the mold cavity 110a through the high-pressure gas pipeline 144, and such implementation is achieved through applying, for example, the gas counter pressure technique. The gas may be an inert gas.

In the present embodiment, the porous structure 130 may be gas-permeable metal and is not particularly limited in other embodiments by the disclosure.

Through the foregoing configuration, the material M and the porous structure 130 are in contact with each other through respective surfaces. After the material M is injected and formed, the gas-driven unit 140 may drive the gas to flow into the mold cavity 110a through the porous structure 130 and to push the material M onto an appearance surface 53. Since an evenly-distributed gas pressure is applied to the material M, gas penetration is prevented from occurring, and that a product featuring favorable quality and yield is produced. In other embodiments, the time point when the gas is driven to flow into the mold cavity 110a through the porous structure 130 is not limited thereto.

In addition, in the process of forming the material M, the gas-driven unit 140 may also be configured to drive the gas to flow out of the mold cavity 110a through the porous structure 130. In this way, forming resistance in the mold cavity 110a is reduced, and the material M may thus be easily formed, and a favorable mold exhaust design is further provided. In other embodiments, the time point when the gas is driven to flow out of the mold cavity 110a through the porous structure 130 is not limited thereto. Besides, even if the gas-driven unit 140 does not drive the gas to flow out of the mold cavity 110a through the porous structure 130, the gas permeability of the porous structure 130 itself is conducive to reduction of the forming resistance as well.

Further, the mold cavity 110a includes a first forming space 111 and a second forming space 112. A width W1 of the first forming space 111 in a thickness direction of the forming article 50 is greater than a width W2 of the second forming space 112 in the thickness direction of the forming article 50. Accordingly, the porous structure 130 corresponds to the first forming space 111, so that it is in the first forming space 111 having the greater width that the gas is provided into the mold cavity 110a. In this way, the material M entering into the first forming space 111 is prevented from contracting and from leading to a defect when a large material amount is provided.

More specifically, the inner surface S of the mold cavity 110a has a concave portion 113. The first forming space 111 includes the concave portion 113, and a convex rib 52 of the forming article 50 is adapted to be formed inside the concave portion 113. In this embodiment, the porous structure 130 is adjacent to the concave portion 113 but is not particularly limited in other embodiments by the disclosure. In the present embodiment, the porous structure 130 surrounds a side edge of the convex rib 52, so that the gas is in contact with a large area of a thick region (that is, the convex rib 52) through the porous structure 130. Since an evenly-distributed gas pressure is applied to the material M, the appearance surface 53 of the forming article 50 is well formed.

Other embodiments are described for illustration in the following. It should be noted that the reference numerals and a part of the contents in the previous embodiment are used in the following embodiments, in which identical reference numerals indicate identical or similar components, and repeated description of the same technical contents is omitted. Please refer to the descriptions of the previous embodiment for the omitted contents, which will not be repeated hereinafter.

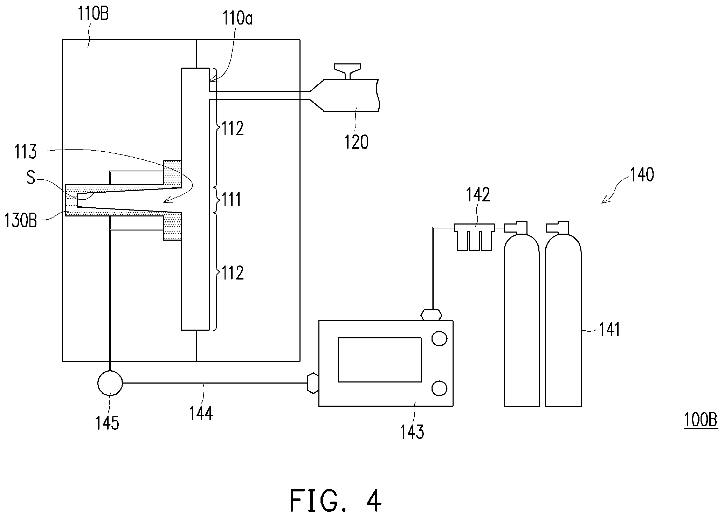

FIG. 4 to FIG. 6 are schematic views of injection molding apparatuses according to other embodiments of the disclosure. With reference to FIG. 4, in the present embodiment, an injection molding apparatus 100B is slightly different from the injection molding apparatus 100, and the difference therebetween lies in that: a porous structure 130B completely encapsulates the concave portion 113 in this embodiment, so that a large area of the porous structure 130B is in contact with the material M, and a favorable gas intake and exhaust effect is thereby obtained.

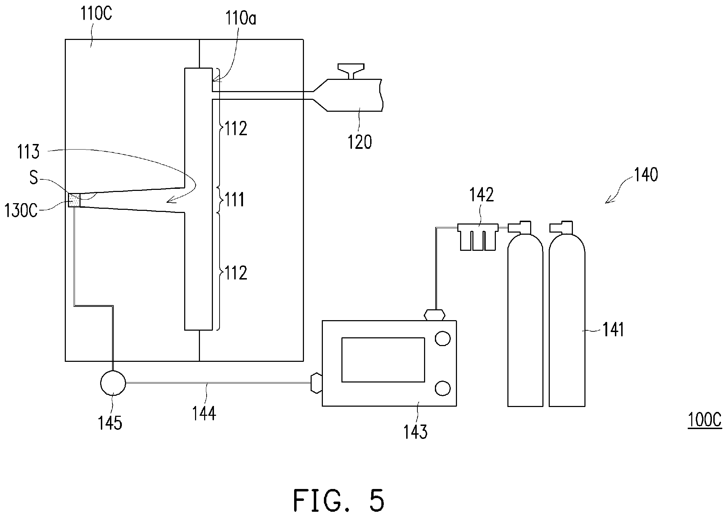

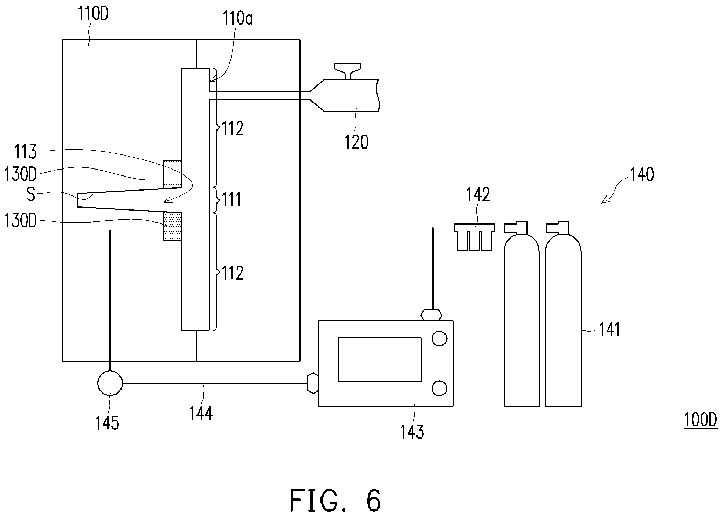

With reference to FIG. 5, in this embodiment, a porous structure 130C of an injection molding apparatus 100C is disposed at an end portion of the concave portion 113. With reference to FIG. 6, in this embodiment, a porous structure 130D of an injection molding apparatus 100D is partially disposed at an edge of the concave portion 113. In an embodiment, the porous structure 130D is in contact with the concave portion 113. In another embodiment, the porous structure 130D may not be in contact with the concave portion 113, which is not limited by the disclosure.

In view of the foregoing, in the disclosure, the porous structure is disposed on the inner surface of the mold cavity, and the porous structure corresponds to the non-appearance surface of the forming article. The gas is driven to flow into or flow out of the mold cavity through the porous structure by the gas-driven unit. After injection and molding are completed, a reverse pressure is introduced into the gas-driven unit to drive the gas to flow into the mold cavity through the porous structure. Since the porous structure and the inner surface of the mold cavity are in contact with each other through respective surfaces, the problem of uneven gas pressure distribution is prevented from occurring, and that a product featuring favorable quality and yield is produced. In addition, the gas-driven unit may drive the gas to flow out of the mold cavity through the porous structure. In this way, the forming resistance in the mold cavity is reduced, and the material may thus be easily formed, and a favorable mold exhaust design is further provided. Besides, even if the gas-driven unit does not drive the gas to flow out of the mold cavity through the porous structure, the gas permeability of the porous structure itself is conducive to reduction of the forming resistance as well.

## Claims

1. An injection molding apparatus (100, 100B, 100C, 100D), comprising:
a mold (110), having a mold cavity (110a);
an injection device (120), adapted to inject a material (M) into the mold cavity (110a) so that the material (M) is formed into a forming article (50);
a porous structure (130, 130B, 130C, 130D), disposed on an inner surface (S) of the mold cavity (110a), corresponding to a non-appearance surface (51) of the forming article (50); and
a gas-driven unit (140), connected to the mold (110) and adapted to drive a gas to flow into or flow out of the mold cavity (110a) through the porous structure (130, 130B, 130C, 130D),
wherein the mold cavity (110a) comprises a first forming space (111) and a second forming space (112), a width (W1) of the first forming space (111) in a thickness direction of the forming article (50) is greater than a width (W2) of the second forming space (112) in the thickness direction of the forming article (50), and the porous structure (130, 130B, 130C, 130D) corresponds to the first forming space (111),
**characterized in that** the inner surface (S) of the mold cavity (110a) has a concave portion (113), the first forming space (111) comprises the concave portion (113), and a convex rib (52) of the forming article (50) is adapted to be formed inside the concave portion (113).

2. The injection molding apparatus (100, 100B, 100C, 100D) according to claim 1, wherein the porous structure (130, 130B, 130C, 130D) is adjacent to the concave portion (113).

3. The injection molding apparatus (100, 100B, 100C, 100D) according to claim 1, wherein the porous structure (130, 130B, 130C, 130D) is gas-permeable metal.

4. An injection molding method, comprising:
providing a mold (110) and a porous structure (130, 130B, 130C, 130D), wherein the mold (110) has a mold cavity (110a), and the porous structure (130, 130B, 130C, 130D) is disposed on an inner surface (S) of the mold cavity (1 10a);
injecting a material (M) into the mold cavity (110a) so that the material (M) is formed into a forming article (50) by an injection device (120), wherein the porous structure (130, 130B, 130C, 130D) corresponds to a non-appearance surface (51) of the forming article (50); and
driving a gas to flow into or flow out of the mold cavity (110a) through the porous structure (130, 130B, 130C, 130D) by a gas-driven unit (140),
wherein the mold cavity (110a) comprises a first forming space (111) and a second forming space (112), a width (W1) of the first forming space (111) in a thickness direction of the forming article (50) is greater than a width (W2) of the second forming space (112) in the thickness direction of the forming article (50), and the step of providing the mold (110) and the porous structure (130, 130B, 130C, 130D) comprises:
setting the porous structure (130, 130B, 130C, 130D) to correspond to the first forming space (111),
**characterized in that** the inner surface (S) of the mold cavity (110a) has a concave portion (113), the first forming space (111) comprises the concave portion (113), and the step of injecting the material (M) into the mold cavity (110a) by the injection device (120) comprises:
setting a convex rib (52) of the forming article (50) to be formed inside the concave portion (113).

5. The injection molding method according to claim 4, wherein the step of providing the mold (110) and the porous structure (130, 130B, 130C, 130D) comprises:
setting the porous structure (130, 130B, 130C, 130D) to be adjacent to the concave portion (113).

6. The injection molding method according to claim 4, wherein the step of providing the porous structure (130, 130B, 130C, 130D) comprises:
setting the porous structure (130, 130B, 130C, 130D) to be made of gas-permeable metal.

## Patentansprüche

1. Spritzgussvorrichtung (100, 100B, 100C, 100D), die Folgendes umfasst:
eine Form (110), die einen Formhohlraum (110a) besitzt;
eine Einspritzeinrichtung (120), die ausgelegt ist, ein Material (M) in den Formhohlraum (110a) derart einzuspritzen, dass das Material (M) zu einem Formartikel (50) geformt wird;
eine poröse Struktur (130, 130B, 130C, 130D), die an einer Innenoberfläche (S) des Formhohlraums (110a) angeordnet ist und einer Nichterscheinungsoberfläche (51) des Formartikels (50) entspricht; und
eine gasbetriebene Einheit (140), die mit der Form (110) verbunden ist und ausgelegt ist, ein Gas derart voranzutreiben, dass es durch die poröse Struktur (130, 130B, 130C, 130D) in den Formhohlraum (110a) strömt oder aus ihm strömt, wobei
der Formhohlraum (110a) einen ersten Formungsraum (111) und einen zweiten Formungsraum (112) umfasst, eine Breite (W1) des ersten Formungsraums (111) in einer Dickenrichtung des Formartikels (50) größer als eine Breite (W2) des zweiten Formungsraums (112) in der Dickenrichtung des Formartikels (50) ist und die poröse Struktur (130, 130B, 130C, 130D) dem ersten Formungsraum (111) entspricht,
**dadurch gekennzeichnet, dass** die Innenoberfläche (S) des Formhohlraums (110a) einen konkaven Abschnitt (113) besitzt, der erste Formungsraum (111) den konkaven Abschnitt (113) umfasst und ein konvexer Steg (52) des Formartikels (50) ausgelegt ist, im konkaven Abschnitt (113) gebildet zu sein.

2. Spritzgussvorrichtung (100, 100B, 100C, 100D) nach Anspruch 1, wobei die poröse Struktur (130, 130B, 130C, 130D) zum konkaven Abschnitt (113) benachbart ist.

3. Spritzgussvorrichtung (100, 100B, 100C, 100D) nach Anspruch 1, wobei die poröse Struktur (130, 130B, 130C, 130D) ein gasdurchlässiges Metall ist.

4. Spritzgussverfahren, das Folgendes umfasst:
Bereitstellen einer Form (110) und einer porösen Struktur (130, 130B, 130C, 130D), wobei die Form (110) einen Formhohlraum (110a) besitzt und die poröse Struktur (130, 130B, 130C, 130D) an einer Innenoberfläche (S) des Formhohlraums (110a) angeordnet ist;
Einspritzen eines Materials (M) in den Formhohlraum (110a) derart, dass das Material (M) zu einem Formartikel (50) geformt wird, durch eine Einspritzeinrichtung (120), wobei die poröse Struktur (130, 130B, 130C, 130D) einer Nichterscheinungsoberfläche (51) des Formartikels (50) entspricht; und
Vorantreiben eines Gases derart, dass es durch die poröse Struktur (130, 130B, 130C, 130D) in den Formhohlraum (1 10a) strömt oder aus ihm strömt, durch eine gasbetriebene Einheit (140), wobei
der Formhohlraum (110a) einen ersten Formungsraum (111) und einen zweiten Formungsraum (112) umfasst, eine Breite (W1) des ersten Formungsraums (111) in einer Dickenrichtung des Formartikels (50) größer als eine Breite (W2) des zweiten Formungsraums (112) in der Dickenrichtung des Formartikels (50) ist und der Schritt des Bereitstellens der Form (110) und der porösen Struktur (130, 130B, 130C, 130D) Folgendes umfasst:
Einstellen der porösen Struktur (130, 130B, 130C, 130D) derart, dass sie dem ersten Formungsraum (111) entspricht,
**dadurch gekennzeichnet, dass** die Innenoberfläche (S) des Formhohlraums (110a) einen konkaven Abschnitt (113) besitzt, der erste Formungsraum (111) den konkaven Abschnitt (113) umfasst und der Schritt des Einspritzens des Materials (M) in den Formhohlraum (1 10a) durch die Einspritzeinrichtung (120) Folgendes umfasst:
Einstellen eines konvexen Stegs (52) des Formartikels (50) derart, dass er im konkaven Abschnitt (113) gebildet wird.

5. Spritzgussverfahren nach Anspruch 4, wobei der Schritt des Bereitstellens der Form (110) und der porösen Struktur (130, 130B, 130C, 130D) Folgendes umfasst:
Einstellen der porösen Struktur (130, 130B, 130C, 130D) derart, dass sie zum konkaven Abschnitt (113) benachbart ist.

6. Spritzgussverfahren nach Anspruch 4, wobei der Schritt des Bereitstellens der porösen Struktur (130, 130B, 130C, 130D) Folgendes umfasst:
Einstellen der porösen Struktur (130, 130B, 130C, 130D) derart, dass sie aus einem gasdurchlässigem Metall hergestellt ist.

## Revendications

1. Appareil de moulage par injection (100, 100B, 100C, 100D) comportant :
un moule (110), ayant une cavité de moule (110a) ;
un dispositif d'injection (120), adapté pour injecter un matériau (M) dans la cavité de moule (110a) de sorte que le matériau (M) est formé dans un article de formage (50) ;
une structure poreuse (130, 130B, 130C, 130D), disposée sur une surface intérieure (S) de la cavité de moule (110a), correspondant à une surface de non-apparition (51) de l'article de formage (50) ; et
une unité entraînée par du gaz (140), reliée au moule (110) et adaptée pour amener un gaz à s'écouler dans la cavité de moule (110a) ou à s'écouler à l'extérieur de celle-ci, à travers la structure poreuse (130, 130B, 130C, 130D),
dans lequel la cavité de moule (110a) comporte un premier espace de formage (111) et un second espace de formage (112), une largeur (W1) du premier espace de formage (111) dans une direction d'épaisseur de l'article de formage (50) est supérieure à une largeur (W2) du second espace de formage (112) dans la direction d'épaisseur de l'article formage (50), et la structure poreuse (130, 130B, 130C, 130D) correspond au premier espace de formage (111),
**caractérisé en ce que** la surface intérieure (S) de la cavité de moule (110a) a une partie concave (113), le premier espace de formage (111) comporte la partie concave (113), et une nervure convexe (52) de l'article de formage (50) est adaptée pour être formée à l'intérieur de la partie concave (113).

2. Appareil de moulage par injection (100, 100B, 100C, 100D) selon la revendication 1, dans lequel la structure poreuse (130, 130B, 130C, 130D) est adjacente à la partie concave (113).

3. Appareil de moulage par injection (100, 100B, 100C, 100D) selon la revendication 1, dans lequel la structure poreuse (130, 130B, 130C, 130D) est un métal perméable au gaz.

4. Procédé de moulage par injection, comportant les étapes consistant à :
fournir un moule (110) et une structure poreuse (130, 130B, 130C, 130D), dans lequel le moule (110) a une cavité de moule (110a), et la structure poreuse (130, 130B, 130C, 130D) est disposée sur une surface intérieure (S) de la cavité de moule (110a) ;
injecter un matériau (M) dans la cavité de moule (110a) de sorte que le matériau (M) est formé dans un article de formage (50) par un dispositif d'injection (120), dans lequel la structure poreuse (130, 130B, 130C, 130D) correspond à une surface de non-apparition (51) de l'article de formage (50) ; et
amener un gaz à s'écouler dans la cavité de moule (110a) et à s'écouler à l'extérieur de celle-ci, à travers la structure poreuse (130, 130B, 130C, 130D) par une unité entraînée par du gaz (140),
dans lequel la cavité de moule (110a) comporte un premier espace de formage (111) et un second espace de formage (112), une largeur (W1) du premier espace de formage (111) dans une direction d'épaisseur de l'article de formage (50) est supérieure à une largeur (W2) du second espace de formage (112) dans la direction d'épaisseur de l'article formage (50), et l'étape de fourniture du moule (110) et de la structure poreuse (130, 130B, 130C, 130D) comporte de :
placer la structure poreuse (130, 130B, 130C, 130D) de manière à correspondre au premier espace de formage (111),
**caractérisé en ce que** la surface intérieure (S) de la cavité de moule (110a) a une partie concave (113), le premier espace de formage (111) comporte la partie concave (113), et l'étape d'injection du matériau (M) dans la cavité de moule (110a) par le dispositif d'injection (120) comporte de :
placer une nervure convexe (52) de l'article de formage (50) de manière à la former à l'intérieur de la partie concave (113).

5. Procédé de moulage par injection selon la revendication 4, dans lequel l'étape de fourniture du moule (110) et de la structure poreuse (130, 130B, 130C, 130D) comporte de :
placer la structure poreuse (130, 130B, 130C, 130D) de manière adjacente à la partie concave (113).

6. Procédé de moulage par injection selon la revendication 4, dans lequel l'étape de fourniture de la structure poreuse (130, 130B, 130C, 130D) comporte de :
placer la structure poreuse (130, 130B, 130C, 130D) de manière à être constituée d'un métal perméable au gaz.
